# EUROPÄISCHE PATENTANMELDUNG

(11) **EP 2 402 416 A1**
(43) Veröffentlichungstag der Anmeldung: **04.01.2012**
(21) Anmeldenummer: 10167822.5
(22) Anmeldetag: 30.06.2010
(51) Int. Cl.: C09K 21/12, D06M 15/43, D06M 15/431, C09K 21/14

(54) **Flammschutzmittelzusammensetzung für Baumwollartikel**

(71) Anmelder: Huntsman Textile Effects (Germany) GmbH, 86462 Langweid a. Lech (DE)
(72) Erfinder: Dermeik, Salman, 86157, Augsburg (DE); Eisele, Andreas, 86152, Augsburg (DE); Demharter, Waltraud, 86450, Altenmünster (DE)

(57) **Zusammenfassung**

Zusammensetzungen, welche sich für die flammhemmende Ausrüstung von Baumwollartikeln oder anderen Cellulosematerialien eignen, werden beschrieben.

Die Zusammensetzungen lassen sich herstellen, indem man ein Tetrakis-hydroxyalkyl-phosphoniumsalz (THP-Salz) mit Caprolactam und Harnstoff zu einem Kondensationsprodukt umsetzt und anschließend ein Kondensat aus überschüssigem THP-Salz und überschüssigem Harnstoff bildet.

Die Zusammensetzungen verleihen Baumwollartikeln flammhemmende Eigenschaften und angenehm weichen Griff bei guter Permanenz gegenüber Waschprozessen.

## Beschreibung

Die Erfindung betrifft eine Zusammensetzung, welche sich zur Behandlung von Fasermaterialien, die Baumwolle enthalten, eignet und diesen Materialien flammhemmende Eigenschaften verleiht. Sie betrifft ferner die Verwendung solcher Zusammensetzungen.

Es ist bekannt, Fasermaterialien, insbesondere in Form von Geweben, Wirkware oder Vliesen (nonwovens) mit wässrigen Zusammensetzungen zu behandeln, welche Kondensationsprodukte aus einem Tetrakis-hydroxyalkyl-phosphoniumsalz (THP-Salz) und einer Stickstoffverbindung, wie z.B. Harnstoff, enthalten. Als Fasermaterialien kommen hierbei unter anderem Gewebe aus Cellulosefasern, z.B. Baumwollgewebe in Frage.

Solche Zusammensetzungen und ihre Verwendung sind beispielsweise in der DE 23 60 723 A1, der US 4 311 855, der US 4 494 951, der US 4 145 463 und der US 4 078 101 beschrieben.

Die in den genannten Schriften beschriebenen Zusammensetzungen weisen neben Vorteilen auch Nachteile auf. Es wurde nämlich gefunden, dass die damit behandelten Gewebe einen unerwünscht harten Griff besaßen. Ein Zusatz von Weichgriffmitteln konnte dieses Problem nicht lösen, weil sich hierdurch Probleme mit der Waschpermanenz der flammhemmenden und/oder Weichgriffausrüstung ergaben. So beschreibt die EP 709 518 A1 Produkte, welche ein Kondensat aus THP-Salz und Harnstoff sowie zusätzlich ein Amin als Weichgriffmittel enthalten. Diese Formulierung vermittelt zwar Textilien einen weicheren Griff als THP-Salz-Kondensate allein, aber die Waschpermanenz der flammhemmenden Ausrüstung ist unbefriedigend, insbesondere, wenn eine Vielzahl von Wäschen bei 95°C durchgeführt wird.

Die Aufgabe der vorliegenden Erfindung bestand darin, eine Zusammensetzung auf Basis eines THP-Salz-Kondensats zur Verfügung zu stellen, welche den damit behandelten Fasermaterialien nicht nur gute flammhemmende Eigenschaften bei hoher Permanenz gegenüber Waschprozessen verleiht, sondern auch einen angenehm weichen Griff, der dem Griff überlegen ist, welcher mit bekannten THP-Salz-Kondensat-Zusammensetzungen erzielt wird.

Die Aufgabe wurde gelöst durch eine Zusammensetzung für die flammhemmende Ausrüstung von Fasermaterialien, die dadurch hergestellt werden kann, dass man zu einem Gemisch aus Wasser und einem Tetrakis-hydroxyalkyl-phosphoniumsalz (THP-Salz) Caprolactam hinzufügt, wobei pro Mol an Tetrakis-hydroxyalkyl-phosphoniumkationen (THP-lonen) 0,03 bis 0,9 Mol, vorzugsweise 0,05 bis 0,2 Mol, Caprolactam hinzugefügt werden, wobei anschließend das Gemisch so lange bei etwa 100°C gehalten wird, bis im wesentlichen kein freies Caprolactam mehr anwesend ist, wobei man anschließend ggf. Harnstoff hinzufügt und das Gemisch mindestens 10 Minuten, vorzugsweise 10 Minuten bis 2 Stunden, auf einer Temperatur von etwa 105°C hält, wobei die hinzugefügte Menge Harnstoff 0 bis 0,7 Mol, vorzugsweise 0,35 bis 0,55 Mol, pro Mol an ursprünglich verwendeten THP-lonen beträgt.

Es wurde gefunden, dass eine solche Zusammensetzung, welche sowohl ein Kondensationsprodukt aus THP-Salz und Harnstoff als auch ein Kondensationsprodukt aus THP-Salz, Caprolactam und Harnstoff enthält, zu einem angenehm weichen Griff ausgerüsteter Textilien führt und dass trotzdem die Effekte auch nach einer Reihe von Wäschen der Textilien bei 95°C permanenter sind als im Fall von Formulierungen, welche keine Kondensationsprodukte von Caprolactam enthalten. Außerdem besitzen erfindungsgemäße Zusammensetzungen den Vorteil guter Lagerstabilität, was zu einem breiten zeitlichen Spielraum bezüglich ihrer Einsatzmöglichkeiten führt.

Es ist jedoch in den meisten Fällen nicht zweckmäßig, in aus dem Stand der Technik bekannten Formulierungen, welche Wasser und ein Kondensationsprodukt aus THP-Salz und Harnstoff enthalten, die Gesamtmenge an diesem Kondensationsprodukt gegen ein Kondensationsprodukt aus THP-Salz, Caprolactam und Harnstoff auszutauschen. Die Folge könnte nämlich ein zu starker Abfall der flammhemmenden Eigenschaften der textilen Fasermaterialien nach Wäschen sein, also eine Verschlechterung der Permanenz. Aus diesem Grund enthalten erfindungsgemäße Zusammensetzungen im Normalfall neben Wasser vorzugsweise sowohl ein Kondensationsprodukt aus THP-Salz und Harnstoff als auch ein Kondensationsprodukt aus THP-Salz, Caprolactam und Harnstoff. Wenn jedoch keine hohe Permanenz der flammhemmenden Effekte ausgerüsteter Fasermaterialien gefordert wird, so ist es möglich, die Mengenverhältnisse bei der Herstellung erfindungsgemäßer Zusammensetzungen so zu steuern, dass im wesentlichen nur Kondensationsprodukte aus THP-Salz, Caprolactam und Harnstoff gebildet werden, jedoch keine Caprolactamfreien Kondensationsprodukte.

Durch das relative Mengenverhältnis von Caprolactam zu Harnstoff hat man ein relativ einfaches Werkzeug zur Hand, um Weichgriff und Permanenz der flammhemmenden Eigenschaften der textilen Fasermaterialien gezielt zu steuern. Wird sehr hohe Permanenz gefordert, so wird man den relativen Anteil an Caprolactam erniedrigen und umgekehrt.

Falls eine bestimmte Menge an Caprolactam als optimal erkannt wurde, so kann, wenn der Weichgriff noch etwas mehr verbessert werden soll, bei der Herstellung der erfindungsgemäßen Zusammensetzung noch ein spezielles Weichgriffmittel oder ein Gemisch solcher Mittel mitverwendet werden. Bevorzugt als zusätzliches Weichgriffmittel ist hierbei ein Amid, das aus einer Monocarbonsäure mit 12 bis 24 Kohlenstoffatomen, vorzugsweise mit 16 bis 20 Kohlenstoffatomen, und einem einwertigen oder mehrwertigen aliphatischen Amin, vorzugsweise Diethylentriamin, gebildet wird. Ein besonders bevorzugtes zusätzliches Weichgriffmittel ist ein Umsetzungsprodukt von 2 Mol einer längerkettigen aliphatischen Monocarbonsäure mit 1 Mol Diethylentriamin. Ein anderes ist das aus Stearinsäure und Ammoniak abgeleitete Stearamid.

Durch die Mitverwendung solcher zusätzlicher Weichgriffmittel ist es möglich, die Menge an Caprolactam geringer zu halten und trotzdem den Textilien weichen Griff zu verleihen. Der Vorteil ist eine verbesserte Permanenz der flammhemmenden Eigenschaften ausgerüsteter Fasermaterialien gegenüber der Verwendung von Zusammensetzungen mit höherem Anteil an Caprolactam.

In bestimmten Fällen kann die Mitverwendung eines zusätzlichen Weichgriffmittels der genannten Art dazu führen, dass die erhaltene Zusammensetzung nicht optimal handhabbar ist und deshalb für die Anwendung Nachteile hat. In diesen Fällen ist es bevorzugt, wenn bei der Herstellung der entsprechenden erfindungsgemäßen Zusammensetzungen zusätzlich noch eines oder mehrere der folgenden Produkte verwendet werden:
- Monoalkylether eines ethoxilierten mehrwertigen aliphatischen Alkohols, wobei der zugrunde liegende Alkohol in nicht-ethoxilierter Form 3 bis 12 Kohlenstoffatome enthält
- ein mittels einer Hydroxyalkylgruppe und mittels einer Alkenylgruppe disubstituiertes Imidazolin

Als gut geeignet haben sich in diesem Zusammenhang erwiesen ein 1.1.1-Trimethylolpropan, bei dem eine der endständigen OH-Gruppen mit 1-Methylpolyethylenglykol verethert ist. Ein solches Produkt kann als Tegomer D 3403 von Tego Chemie, Essen, DE, bezogen werden.

Ein weiteres gut geeignetes Produkt ist 2-(2-Heptadec-8-enyl-2-imidazolin-1-yl)ethanol, also ein disubstituiertes Imidazolin mit der CAS-Nr. 95-38-5. Ein solches Produkt kann von der Firma Sasol Germany GmbH, DE, unter dem Namen Marlowet 5440 bezogen werden.

Ein Produkt, welches sich als Zusatz bei der Herstellung einer erfindungsgemäßen Zusammensetzung gut bewährt hat, ist Ethylenglykol. Hierdurch lässt sich häufig ein weicherer Griff ausgerüsteter Fasermaterialien erzielen.

In manchen Fällen kann es von Vorteil sein, wenn bei der Herstellung erfindungsgemäßer Zusammensetzungen zusätzlich geringe Mengen Formaldehyd und/oder eines sauren Orthophosphorsäureesters mitverwendet werden. Als Phosphorsäureester ist ein Dialkylphosphat geeignet, das während der Umsetzung als Entschäumer wirken kann. Durch den Zusatz von Formaldehyd lässt sich gegebenenfalls eine Stabilisierung der Ausgangsmischung erzielen.

Eine bevorzugte Ausführungsform erfindungsgemäßer Zusammensetzungen besteht darin, dass bei ihrer Herstellung folgende Mengen an zusätzlichen Produkten neben THP-Salz, Wasser, Caprolactam und Harnstoff mitverwendet werden:
0,5 bis 8 g an einem oben beschriebenen Amid einer Monocarbonsäure
3 bis 20 g an Monoalkylether eines ethoxilierten mehrwertigen aliphatischen Alkohols wie oben beschrieben
3 bis 20 g an disubstituiertem Imidazolin
6 bis 18 g Monoethylenglykol

Diese Mengen sind auf 1 Mol an ursprünglich eingesetzten Tetrakis-hydroxyalkylphosphonium-kationen (THP-lonen) bezogen.

Bei der Herstellung einer erfindungsgemäßen Zusammensetzung entsteht im Normalfall, nachdem die Gesamtmenge an Caprolactam umgesetzt ist, aus THP-Salz und überschüssigem Harnstoff ein Kondensationsprodukt, das aus dem Stand der Technik bekannt und z.B. in den eingangs erwähnten Patentdokumenten beschrieben ist. Es handelt sich um ein Kondensat aus einem Tetrakis-hydroxyalkyl-phosphoniumsalz (THP-Salz) und Harnstoff. Als THP-Salz bevorzugt ist Tetrakis-hydroxymethyl-phosphoniumchlorid (THPC, CAS-Nr. 124-61-1) oder Tetrakis-hydroxymethyl-phosphoniumsulfat oder ein Gemisch dieser Salze. THPC kann nach allgemein bekannten Verfahren hergestellt werden oder von der Firma FEBEX S.A., CH, bezogen werden. Auch Tetrakis-hydroxyethyl-phosphoniumchlorid oder -sulfat kann als THP-Salz verwendet werden.

Die Umsetzung von THP-Salz mit Harnstoff kann nach Methoden erfolgen, welche in der Literatur beschrieben sind, z.B. durch Kondensationsreaktion unter Rückfluß eines Gemischs, das 7200 Gew.teile 80 %iges THPC, 1000 Gew.teile Harnstoff, 450 Gew.teile Wasser und 300 Gew.teile Ethylenglykol enthält. Entsprechende Details zur Durchführung der Umsetzung gehen aus der US 2 983 623 hervor. Das entstehende Kondensat, jedoch ohne Zusatz von Ethylenglykol, ist unter der CAS-Nr. 27104-30-9 bekannt.

Eine bevorzugte Methode der Herstellung erfindungsgemäßer Zusammensetzungen besteht darin, dass man zuerst eine Mischung herstellt, welche Wasser, Caprolactam sowie einen Überschuß an THP-Salz enthält, und anschließend daran einen Überschuß an Harnstoff hinzufügt, um einerseits ein Kondensationsprodukt aus THP-Salz, Caprolactam und Harnstoff herzustellen und dann aus überschüssigem Harnstoff und mit überschüssigem THP-Salz ein THP-Salz/Harnstoff-Kondensat herzustellen und gegebenenfalls weitere Produkte vor oder nach dem Zusatz von Harnstoff hinzufügt. Bei diesem Verfahren muß also mit einem Überschuß an THP-Salz gegenüber derjenigen Menge gearbeitet werden, welche für die Bildung des THP-Salz-Caprolactam-Harnstoff-Kondensationsprodukts nötig wäre. Sobald die Umsetzung von THP-Salz mit Caprolactam beendet ist, wird Harnstoff hinzugefügt, was einerseits zur Bildung eines Kondensats aus THP-Caprolactam-Kondensat und Harnstoff führt, und andererseits anschließend zur Bildung eines Kondensats aus überschüssigem Harnstoff und überschüssigem THP-Salz.

Das bevorzugte Verfahren zur Herstellung erfindungsgemäßer Zusammensetzungen ist also dadurch gekennzeichnet, dass man zuerst aus einem Überschuß THP-Salz und aus Caprolactam ein Kondensat herstellt und dieses Kondensat dann mit Harnstoff umsetzt und wobei man anschließend mit bei der Umsetzung anwesendem überschüssigen THP-Salz und überschüssigem Harnstoff durch Kondensation ein THP-Salz-Harnstoff-Kondensat bildet, wobei man vor oder nach der Herstellung der Zusammensetzung gegebenenfalls weitere Komponenten hinzufügt.

Das Mengenverhältnis THP-Salz : Harnstoff bei der Kondensationsreaktion kann die Eigenschaften des Endprodukts und damit die Anwendungsmöglichkeiten beeinflussen. Gleiches gilt für das Mengenverhältnis THP-Salz : Caprolactam : Harnstoff.

Bei der Herstellung erfindungsgemäßer Zusammensetzungen wird im Normalfall handelsübliches THP-Salz verwendet, das etwa
65 bis 85 Gew% THP-Salz und
15 bis 35 Gew% Wasser enthält.

Nach der Kondensationsreaktion liegt normalerweise ein wässriges System vor, das die beschriebenen zwei Typen von Kondensaten und gegebenenfalls weitere gewünschte Zusätze enthält. Dieses System kann direkt zur Behandlung von Fasermaterialien eingesetzt werden, wobei je nach Wunsch vorher eine Verdünnung auf Gebrauchskonzentration erfolgt.

Die erfindungsgemäßen Zusammensetzungen eignen sich ausgezeichnet zur flammhemmenden Ausrüstung von Fasermaterialien, denen sie neben guten flammhemmenden Eigenschaften noch angenehm weichen Griff bei guter Permanenz der Effekte gegenüber Waschprozessen verleihen. Die Fasermaterialien sind hierbei bevorzugt textile Flächengebilde in Form von Geweben, Wirkware oder Vliesen (nonwovens). Sie bestehen vorzugsweise zu 50 bis 100 Gew% aus Baumwolle oder anderen Cellulosematerialien. So lassen sich unter anderem Fasermaterialien herstellen, die für Schutzbekleidung, Heimtextilien und technische Textilien verwendet werden können.

Die Applikation der erfindungsgemäßen Zusammensetzungen auf die Fasermaterialien kann nach allgemein bekannten Methoden erfolgen, z.B. durch Foulard-Imprägnierung mit anschließender Trocknung. Im Fall von Baumwollartikeln kann sich eine Ammoniak-Nachbehandlung anschließen, wie sie aus der Literatur bekannt ist.

Die Erfindung wird nunmehr durch Ausführungsbeispiele veranschaulicht.

### Beispiel 1 (nicht erfindungsgemäßes Vergleichsbeispiel)

Ein Kondensat aus Tetrakis-hydroxymethyl-phosphoniumchlorid (THPC) und Harnstoff wurde, ausgehend von 500 Gew.teilen Wasser, 7200 Gew.teilen an 80 Gew%iger THPC-Lösung in Wasser und 1000 Gew.teilen Harnstoff, nach den Angaben in Beispiel 1 der US 2 983 623 hergestellt, wobei jedoch der Mischung der Ausgangsprodukte noch zusätzlich 300 Gewichtsteile Ethylenglykol hinzugefügt wurden.

### Beispiel 2 (erfindungsgemäß)

In einem Gefäß, das mit Rückflusskühler versehen war, wurden 2 Mol THPC in Form einer 80 Gew%igen Mischung mit Wasser vorgelegt. Es wurden 4 Mol Wasser hinzugefügt und der pH-Wert mittels 0,2 Mol 50 %iger wässriger Kaliumhydroxidlösung auf einen Wert von etwa 5 - 6 eingestellt. Man fügte je 0,02 Mol eines Imidazolinderivates (CAS-Nr. 95-38-5) und eines Fettsäureaminoamids hinzu, hergestellt aus Stearinsäure und Diethylentriamin). Die Mischung wurde auf etwa 100°C erwärmt und es wurden 0,2 Mol Caprolactam hinzugefügt, die Mischung bei etwa 100°C unter Rückfluß gekocht. Anschließend fügte man 0,9 Mol Harnstoff hinzu und hielt das Gemisch etwa 30 Minuten lang bei 105°C. Dann gab man 0,4 Mol Ethylenglykol hinzu und ließ das Produkt auf Raumtemperatur abkühlen.

Man erhielt ein leicht gelb gefärbtes, leicht trübes Produkt.

### Beispiel 3 (erfindungsgemäß)

3 Mol THPC in Form einer 80 Gew%igen Lösung in Wasser wurden vorgelegt und 3 Mol Wasser zusätzlich hinzugefügt. Anschließend wurden 7,5 g (0,075 Mol) Formaldehyd in Form einer 35 Gew%igen wässrigen Lösung hinzugefügt. Ferner wurden 0,015 Mol eines nichtionogenen Polyethers (Tegomer^{®} D 3403, beziehbar von Tego Chemie, Essen, DE), 0,3 Mol Caprolactam, 3,5 g eines Säureaminoamids (erhalten aus Stearinsäure und Diethylentriamin) hinzugefügt und das Gemisch 3 Stunden bei 100°C unter Rückfluß gekocht. Nach Abkühlen auf 80°C wurden 0,11 Mol Dibutylphosphat zugegeben, 5 Minuten gerührt, dann 1,5 Mol Harnstoff zugegeben.

Das Gemisch wurde auf 105°C erwärmt und 30 Minuten auf dieser Temperatur gehalten. Anschließend gab man 0,6 Mol Monoethylenglykol zu und ließ auf Raumtemperatur abkühlen. Man erhielt ein leicht gefärbtes, leicht trübes Produkt.

Mit den Produkten der Beispiele 1 bis 3 wurden Gewebe aus 100 % Baumwolle über Foulardapplikation behandelt und getrocknet. Daran anschließend wurde eine Ammoniak-Nachbehandlung durchgeführt, wie sie aus dem Stand der Technik bekannt ist. An den so erhaltenen Geweben wurden das Brennverhalten bestimmt und der Griff beurteilt.

Die Flottenaufnahme (Gewichtszunahme durch Foulard-Imprägnierung, bestimmt am getrockneten Gewebe) betrug in allen 3 Fällen etwa 80 %.

An den so erhaltenen Gewebeproben wurde das Brennverhalten vor und nach 50 Wäschen bei 95°C bestimmt. Außerdem wurde jeweils der Griff des Gewebes beurteilt. Der Griff wurde in Form von Noten von 1 bis 5 beurteilt. Hierbei bedeutet Note 1 einen schlechten/harten Griff und Note 5 einen sehr angenehmen weichen Griff.

Das Brennverhalten wurde an den 3 Gewebeproben sowohl vor Waschvorgängen als auch nach 50 Wäschen bei 95°C ermittelt. Ein Vergleich der Werte, die an der gleichen Probe vor und nach Wäschen ermittelt wurden, erlaubt eine Aussage über die Permanenz der flammhemmenden Wirkung.

Die erhaltenen Ergebnisse zeigt Tabelle 1.

**Tabelle 1**

| | Griff |
|---|---|
| Beispiel 1 | 2 |
| Beispiel 2 | 4 |
| Beispiel 3 | 5 |

Alle 3 Proben zeigten gute flammhemmende Wirkung, sowohl vor der Durchführung von Waschvorgängen, als auch nach 50 Wäschen bei 95°C. Mit anderen Worten: sowohl die Proben, die mit erfindungsgemäßen Zusammensetzungen behandelt worden waren als auch die nicht-erfindungsgemäße Probe zeigten gute Permanenz der flammhemmenden Wirkung.

## Patentansprüche

1. Zusammensetzung für die flammhemmende Ausrüstung von Fasermaterialien, die dadurch hergestellt werden kann, dass man zu einem Gemisch aus Wasser und einem Tetrakis-hydroxyalkyl-phosphoniumsalz (THP-Salz) Caprolactam hinzufügt, wobei pro Mol an Tetrakis-hydroxyalkyl-phosphoniumkationen (THP-lonen) 0,03 bis 0,9 Mol, vorzugsweise 0,05 bis 0,2 Mol, Caprolactam hinzugefügt werden, wobei anschließend das Gemisch so lange bei etwa 100°C gehalten wird, bis im wesentlichen kein freies Caprolactam mehr anwesend ist, wobei man anschließend ggf. Harnstoff hinzufügt und das Gemisch mindestens 10 Minuten, vorzugsweise 10 Minuten bis 2 Stunden, auf einer Temperatur von etwa 105°C hält, wobei die hinzugefügte Menge Harnstoff 0 bis 0,7 Mol, vorzugsweise 0,35 bis 0,55 Mol, pro Mol an ursprünglich verwendeten THP-lonen beträgt.

2. Zusammensetzung nach Anspruch 1, **dadurch gekennzeichnet, dass** das THP-Salz Tetrakis-hydroxymethyl-phosphoniumchlorid oder Tetrakis-hydroxymethylphosphoniumsulfat oder ein Gemisch dieser Salze ist.

3. Zusammensetzung nach Anspruch 1 oder 2, **dadurch gekennzeichnet, dass** bei ihrer Herstellung zusätzlich ein Amid mitverwendet wird, das aus einer Monocarbonsäure mit 12 bis 24 Kohlenstoffatomen, vorzugsweise mit 16 bis 20 Kohlenstoffatomen, und einem einwertigen oder mehrwertigen aliphatischen Amin, vorzugsweise Diethylentriamin, gebildet wird.

4. Zusammensetzung nach einem oder mehreren der Ansprüche 1 bis 3, **dadurch gekennzeichnet, dass** bei ihrer Herstellung zusätzlich eines oder mehrere der folgenden Produkte mitverwendet werden:
― Monoalkylether eines ethoxilierten mehrwertigen aliphatischen Alkohols, wobei der zugrunde liegende Alkohol in nicht-ethoxilierter Form 3 bis 12 Kohlenstoffatome enthält
― ein mittels einer Hydroxyalkylgruppe und mittels einer Alkenylgruppe disubstituiertes Imidazolin

5. Zusammensetzung nach einem oder mehreren der Ansprüche 1 bis 4, **dadurch gekennzeichnet, dass** bei ihrer Herstellung zusätzlich Monoethylenglykol mitverwendet wird.

6. Verwendung einer Zusammensetzung gemäß einem oder mehreren der Ansprüche 1 bis 5 zur Behandlung von Fasermaterialien.

7. Verwendung nach Anspruch 6, **dadurch gekennzeichnet, dass** die Fasermaterialien textile Flächengebilde in Form von Geweben, Wirkware oder Vliesen (nonwovens) sind.

8. Verwendung nach Anspruch 6 oder 7, **dadurch gekennzeichnet, dass** die Fasermaterialien zu 50 bis 100 Gew% aus Baumwolle bestehen.
